# EUROPEAN PATENT SPECIFICATION

(11) **EP 2 851 190 B1**
(45) Date of publication and mention of the grant of the patent: **20.05.2020**
(21) Application number: 14183560.3
(22) Date of filing: 04.09.2014
(51) Int. Cl.: B32B 1/08, B32B 27/08, B32B 27/34, B32B 27/40, F16L 11/04, F16L 9/12

(54) **Hydrogen transfer tube**
Wasserstoffübertragungsrohr
Tube de transfert d'hydrogène

(30) Priority: 24.09.2013 KR 20130113255
(43) Date of publication of application: 25.03.2015
(73) Proprietor: Hanil Tube Corporation, Incheon 404-722 (KR)
(72) Inventor: Choo, Albert (Seong-Hwa), 407-053 Incheon (KR); Na, Byeong-Rok, 401-732 Incheon (KR)
(74) Representative: Rohmann, Michael

(56) References cited:
- EP-A1- 0 637 509
- WO-A1-2014/028700
- US-A1- 2004 069 361
- US-A1- 2004 134 555
- US-A1- 2006 124 190
- US-A1- 2011 005 735
- US-A1- 2013 186 469

## Description

### BACKGROUND OF THE INVENTION

### 1. Field of the invention

The present invention relates to a tube for transferring hydrogen. Specifically, the present invention relates to a tube for transferring hydrogen which is capable of safely supplying hydrogen to a hydrogen battery used in automobiles, ships, portable generators, and the like.

### 2. Description of the Prior Art

Due to environmental regulations applied to transportation fields and the depletion of carbon fuels, new methods for supplying electric power to automobiles, ships, and the like have been presented. These new methods may be thought to be the simplest in using electric power, but storing electric energy in transport vehicles is problematic. Known storage batteries are relatively heavy and have increased volumes, and cannot store sufficient amounts of energy for long distance travel.

Therefore, attempts are being made to substitute general storage batteries with fuel batteries. Fuel batteries employ the contrary principle of electrolysis. In general, electricity is generated by a chemical reaction of hydrogen as fuel and oxygen as an oxidant. The hydrogen is stored in a tank mounted in the transport vehicle. Hydrogen is transferred through a pipe made of steel which can withstand high temperatures (100°C or higher) and high pressures (about 5 bar). The steel has an advantage of being substantially inactive with respect to hydrogen, and thus prevents the decomposition of the pipe due to hydrogen gas or the contamination of gas.

However, oxygen tends to deteriorate steel. Moreover, the steel pipe has problems in that it is heavy, is not flexible, and is expensive.

US 2013 / 0186 469 A1 describes a tubing which can be used, amongst others, for routing and delivery of hydrogen. The tubing comprises three layers, wherein the inner layer comprises a thermoplastic polyurethane. The intermediate layer is an adhesive layer comprising an ethylene-ethyl acrylate copolymer, whereas the outer layer is made of a thermoplastic polyurethane. A polyamide layer is not disclosed.

US 2004 / 0069 361 A1 teaches a hose which is explicitly directed to a fluid containing hydrogen. The innermost layer is made of a fluoropolymer followed by polyurethane as an adhesive layer which is in turn followed by a barrier layer comprising EVOH. This barrier layer is covered by a second layer of polyurethane which is finally coated by a polybutylene terephthalate layer. Again, a polyamide layer is not disclosed.

WO 2014 / 028 700 A1 is directed onto a tube for applications in the medical field. Amongst others, hydrogen is a fluid which can be guided with this kind of tube. The tube comprises five layers, wherein the innermost layer is a polyethylene layer. This innermost layer is followed by an adhesive layer comprising an ethylene acrylic copolymer which is in turn coated by a barrier layer made of EVOH and/or polyamide. The barrier layer is covered by a second adhesive layer made of an ethylene acrylic copolymer which is in turn coated by a layer comprising polyurethane.

EP 0 637 509 A1 recommends an innermost layer comprising a polyamide which is covered by an adhesive layer comprising polyurethane. However, this tube is not intended to guide hydrogen.

US 2004 / 0134 555 A1 discloses an innermost layer of polyamide which is covered by a layer of polyurethane which is in turn coated by a second layer of polyamide. This tube is however not made for hydrogen but instead for hydraulic brake lines.

### SUMMARY OF THE INVENTION

The present invention has been made to solve the above-mentioned problems occurring in the prior art, and an aspect of the present invention is to provide a tube for transferring hydrogen, that is, a hydrogen transfer tube which can withstand high temperatures and high pressures and is flexible.

Another aspect of the present invention is to provide a hydrogen transfer tube which is durable even under low temperatures and high pressures as well as high temperatures and high pressures and is flexible.

In order to accomplish these objects, there is provided a hydrogen transfer tube, including: a first layer formed of a material having elusion resistance to hydrogen; and a second layer, as a separate layer surrounding an outer surface of the first layer, formed of polyurethane in order to prevent the permeation of hydrogen,
characterized in that
the material of the first layer is a polyamide-based material, wherein the first layer forms a layer that is in direct contact with hydrogen flowing through the hydrogen transfer tube.

The hydrogen transfer tube may further include a first protective layer disposed to surround the first layer and the second layer and providing shock resistance and heat resistance to the tube.

The first protective layer may be formed of a thermoplastic elastomer.

The hydrogen transfer tube may further include a second protective layer disposed to surround the first layer and the second layer and providing shock resistance and heat resistance to the tube.

The second protective layer may be formed of a thermoplastic elastomer.

The first protective layer may be disposed to surround an outer surface of the second protective layer.

### BRIEF DESCRIPTION OF THE DRAWINGS

The above and other objects, features and advantages of the present invention will be more apparent from the following detailed description taken in conjunction with the accompanying drawing, in which:

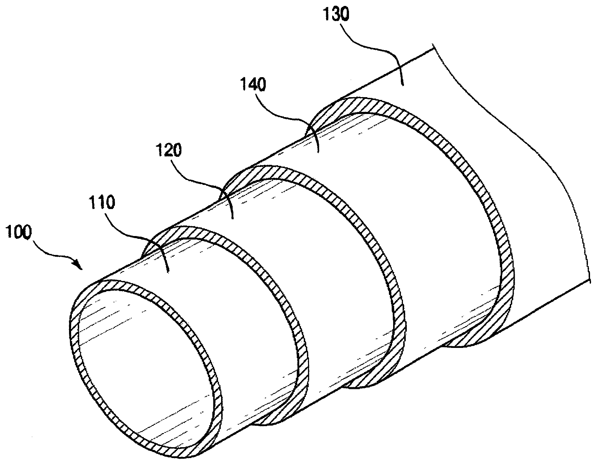

FIG. 1 is a perspective view showing a hydrogen transfer tube composed of four layers according to an embodiment of the present invention.

### DETAILED DESCRIPTION OF THE PREFERRED EMBODIMENTS

Hereinafter, a hydrogen transfer tube 100 according to an embodiment of the present invention will be described. The hydrogen transfer tube 100 described herein is exemplified as one that is used to transfer hydrogen fuel in an apparatus generating power by using the hydrogen fuel. For example, the hydrogen transfer tube 100 may serve as a supply pipe for supplying hydrogen fuel to a fuel battery in automobiles or ships driven by the hydrogen fuel. The hydrogen transfer tube 100 according to an embodiment of the present invention includes a first layer 110 and a second layer 120.

FIG. 1 is presented to illustrate the first layer 110 and the second layer 120 constituting the hydrogen transfer tube 100. FIG. 1 is a perspective view showing a tube composed of multiple layers. FIG. 1 shows schematically a hydrogen transfer tube composed of a first layer and a second layer sequentially from the inside according to an embodiment of the present invention.

The first layer 110 forms a layer that is in direct contact with hydrogen flowing through the hydrogen transfer tube 100. Therefore, the first layer 110 is formed of an elution-resistant material so as to prevent the contamination of hydrogen due to the elution of components constituting the first layer 110 into the hydrogen transfer tube 100. According to the invention, the material for the first layer 110 is a polyamide-based material. A fluorinated material that is conventionally used has low permeability to alcohol, and has an advantage in that the eluted material thereof is less when the fluid is liquid than when the fluid is gas. However, when the fluid is gas like hydrogen, a polyamide-based material such as nylon has excellent elution resistance. The thickness of the first layer 110 may be appropriately changed according to the required durability and strength of the hydrogen transfer tube.

The second layer 120 forms a layer providing airtightness to the hydrogen transfer tube 100. A hydrogen gas molecule has the smallest volume and weight among molecules, and has a high probability of leaking, and has a high risk of exploding when it leaks. Therefore, the airtightness of the hydrogen transfer tube is of the most importance. The second layer 120 is preferably made of polyurethane in order to prevent the permeation of hydrogen. In conventional cases, polyurethane is used for an adhesive layer that attaches two layers to each other in a multi-layered tube. However, in the present hydrogen transfer tube 100, a polyurethane layer is provided as a separate layer having a predetermined thickness for airtightness. The second layer may have an appropriate thickness depending to the required durability, airtightness, and strength of the hydrogen transfer tube 100.

According to an embodiment of the present invention, the hydrogen transfer tube 100 may further include a first protective layer 130.

FIG. 1 shows the hydrogen transfer tube 100 including the first layer 110, the second layer 120, and the first protective layer 130 according to an embodiment of the present invention. Referring to FIG. 1, the first protective layer 130 is formed to surround the first layer 110 and the second layer 120. The first protective layer 130 provides shock resistance and heat resistance (flame retardancy) to the hydrogen transfer tube 100. That is, the first protective layer 130 enhances physical durability to the hydrogen transfer tube 100, and, due to the placement of the first protective layer 130, the hydrogen transfer tube 100, for example, can withstand at a high temperature of 115°C or a low temperature of -40°C and can withstand a shock applied from the outside. The excellent physical durability of the hydrogen transfer tube 100 provides advantages when an automobile or a ship equipped with the hydrogen transfer tube 100 is used in a desert, tropical, cold, or polar region, or when the hydrogen transfer tube 100 is equipped on a bottom surface of an automobile and small stones may bounce up during traveling. According to an embodiment, the first protective layer 130 is preferably formed of a thermoplastic elastomer.

According to an embodiment of the present invention, the hydrogen transfer tube 100 may further include a second protective layer 140.

FIG. 1 shows the hydrogen transfer tube 100 including the first layer 110, the second layer 120, the first protective layer 130, and the second protective layer 140 according to an embodiment of the present invention. Referring to FIG. 1, the second protective layer 140 is formed to surround the first layer 110 and the second layer 120. The second protective layer 140 provides chemical resistance to the hydrogen transfer tube 100. That is, the second protective layer 140 enhances durability against chemical shocks applied to the hydrogen transfer tube 100 from the outside. Due to the placement of the second protective layer 140, the hydrogen transfer tube 100, for example, can withstand a high pressure of 10 bar or higher, and can be prevented from deteriorating due to materials entering from the outside. According to an embodiment, the second protective layer 140 is preferably formed of a polyester-based material. Further, according to an embodiment, the second protective layer 140 is preferably formed inside the first protective layer 130.

Hereinafter, performance test results of the hydrogen transfer tube according to an embodiment of the present invention are presented.

### <Hydrogen leak test>

Test was conducted as follows.
1) A 1/2" tube is installed.
2) Hydrogen (purity: 99%) is applied (20 barg) to perform soaking for 4 hours for each temperature (25°C room temperature, -40°C low temperature, and 115°C high temperature).
3) After the soaking, the pressure change over 1 hour is checked.
4) The pressure change is used to verify the amount of hydrogen that leaked and the deformation of the tube.

The test results indicated that the pressure change did not occur due to the maintenance of airtightness and the amount of hydrogen leaked was less than the standard value.

The standard value may be the European standard (EC406) or an individual standard value from the final manufacturer of an OEM vehicle or the like.

The present test verified that the hydrogen transfer tube according to an embodiment of the present invention had a more excellent effect than the existing tubes for mass production in light of permeation resistance according to the temperature change at room temperature, low temperature, and high temperature.

### <Burst pressure evaluation>

The burst pressure is required to be 60 barg or higher.

Test results were as follows.

**[Table 1]**

| Classification | Room temperature (25°C) | Low temperature (-40°C) | High temperature (115°C) |
|---|---|---|---|
| Burst pressure (barg) | 190 barg | 190 barg | 120 barg |

Table 1 shows that the burst pressure of the hydrogen transfer tube according to an embodiment of the present invention was three times or higher in room temperature and the low temperature and two times or higher in the high temperature, as compared with the required burst pressure.

It can be seen from the present test that the hydrogen transfer tube according to an embodiment of the present invention had a more excellent effect than the existing tubes for mass production in light of permeation resistance according to the temperature change in the burst pressure test at room temperature, low temperature, and high temperature.

### <Pressure circulation evaluation>

The purpose of the pressure circulation evaluation is to verify the deformation of a product and the maintenance of airtightness when the test is conducted under extreme conditions of repetitive circulation evaluation. The test was conducted for 100,000 cycles at 1 cycle per 10 seconds at the minimum pressure of 5 barg and the maximum pressure of 20 barg.

The following is about specific pressures in the test cycles.

**[Table 2]**

| Pressure maintenance time (s) | Applied pressure (barg) |
|---|---|
| 0 ∼ 1 | 0 |
| 2 ∼ 3 | 5 |
| 4 ∼ 6 | 20 |
| 7 ∼ 8 | 5 |
| 9 ∼ 10 | 0 |

Test results were as follows.

**[Table 3]**

| | Room temperature (25°C) | Low temperature (-40°C) | High temperature (115°C) |
|---|---|---|---|
| Deformed or Not | No | No | No |

Table 3 shows that the hydrogen transfer tube according to an embodiment of the present invention was not deformed even at the pressure circulation test of 100,000 cycles at room temperature, low temperature, and high temperature.

After the pressure circulation test, the hydrogen leak test and the burst pressure test were conducted in order to check the deformation of a product and the maintenance of airtightness. Test results were as follows.

**[Table 4]**

| | Room temperature (25°C) | Low temperature (-40°C) | High temperature (115°C) |
|---|---|---|---|
| Amount of hydrogen leaked | None | None | None |
| Burst pressure (barg) | 180 barg | 180 barg | 120 barg |

Table 4 shows that, from the present pressure circulation test, as for the hydrogen transfer tube according to an embodiment of the present invention, the amount of hydrogen leaked was not abnormal at room temperature, low temperature, and high temperature, and the burst pressure was three times in room temperature and the low temperature and two times in the high temperature as compared with the burst pressure (60 barg) required in the burst pressure test. Therefore, the hydrogen transfer tube according to an embodiment of the present invention was excellent in effects depending on the temperature change and the pressure change as compared with the tube for mass production.

### <Pressure/vibration/temperature test>

The pressure/vibration/temperature (PVT) test is a comprehensive performance evaluation with respect to pressure, vibration, and temperature, and is conducted for 14 days at 1 cycle per day at respective temperatures. After the PVT test, the hydrogen leak test and the burst pressure test were sequentially conducted.

Test results were as follows.

**[Table 5]**

| | Room temperature (25°C) | Low temperature (-40°C) | High temperature (115°C) |
|---|---|---|---|
| Amount of hydrogen leaked | None | None | None |
| Burst pressure (barg) | 180 barg | 180 barg | 120 barg |

Table 5 shows that, after the PVT test of 14 cycles at room temperature, low temperature, and high temperature, as for the hydrogen transfer tube according to an embodiment of the present invention, the amount of hydrogen leaked was not abnormal at room temperature, low temperature, and high temperature, and the burst pressure was three times in room temperature and the low temperature and two times in the high temperature as compared with the burst pressure (60 barg) required in the burst pressure test. It can be seen from the present test that, in the hydrogen leak test and the burst pressure test at room temperature, low temperature, and high temperature, the hydrogen transfer tube according to an embodiment of the present invention was excellent in effects depending on the temperature change and the pressure change as compared with the tube for mass production.

Although preferable embodiments of the present invention have been mainly described, various changes can be made within the scope of the invention described in the accompanying claims.

## Claims

1. Use of a tube as a hydrogen transfer tube, comprising:
a first layer formed of a material having elusion resistance to hydrogen; and
a second layer, as a separate layer surrounding an outer surface of the first layer, formed of polyurethane in order to prevent the permeation of hydrogen,
**characterized in that**
the material of the first layer is a polyamide-based material, wherein the first layer forms a layer that is in direct contact with hydrogen flowing through the hydrogen transfer tube.

2. Use of the hydrogen transfer tube of claim 1, further comprising a first protective layer disposed to surround the first layer and the second layer and providing shock resistance and heat resistance to the tube.

3. Use of the hydrogen transfer tube of claim 2, wherein the first protective layer is formed of a thermoplastic elastomer.

4. Use of the hydrogen transfer tube of claim 2, further comprising a second protective layer disposed to surround the first layer and the second layer and providing chemical resistance to the tube.

5. Use of the hydrogen transfer tube of claim 4, wherein the second protective layer is formed of a polyester-based material.

6. Use of the hydrogen transfer tube of claim 4, wherein the first protective layer is disposed to surround an outer surface of the second protective layer.

## Patentansprüche

1. Benutzung eines Rohrs als ein Wasserstoffübertragungsrohr, aufweisend:
eine erste Schicht, die aus einem Material gebildet ist, das Beständigkeit gegen Entweichen von Wasserstoff aufweist; und
eine zweite Schicht, die als eine separate Schicht eine Außenfläche der ersten Schicht umgibt, gebildet aus Polyurethan, um den Wasserstoffdurchtritt zu verhindern,
**dadurch gekennzeichnet, dass**
das Material der ersten Schicht ein Material auf Polyamidbasis ist, wobei die erste Schicht eine Schicht bildet, die in direktem Kontakt mit Wasserstoff ist, der durch das Wasserstoffübertragungsrohr strömt.

2. Benutzung des Wasserstoffübertragungsrohrs nach Anspruch 1, ferner aufweisend eine erste Schutzschicht, die so angeordnet ist, dass sie die erste Schicht und die zweite Schicht umgibt und dem Rohr Stoßfestigkeit und Wärmebeständigkeit verleiht.

3. Benutzung des Wasserstoffübertragungsrohrs nach Anspruch 2, wobei die erste Schutzschicht aus einem thermoplastischen Elastomer gebildet ist.

4. Benutzung des Wasserstoffübertragungsrohrs nach Anspruch 2, ferner aufweisend eine zweite Schutzschicht, die so angeordnet ist, dass sie die erste Schicht und die zweite Schicht umgibt und dem Rohr Chemikalienbeständigkeit verleiht.

5. Benutzung des Wasserstoffübertragungsrohrs nach Anspruch 4, wobei die zweite Schutzschicht aus einem Material auf Polyesterbasis gebildet ist.

6. Benutzung des Wasserstoffübertragungsrohrs nach Anspruch 4, wobei die erste Schutzschicht so angeordnet ist, dass sie eine Außenfläche der zweiten Schutzschicht umgibt.

## Revendications

1. Utilisation d'un tube en tant que tube de transfert d'hydrogène, comprenant :
une première couche formée d'un matériau comportant une résistance d'élusion à l'hydrogène ; et
une seconde couche, en tant que couche séparée entourant une surface extérieure de la première couche, formée de polyuréthane de manière à empêcher la perméation d'hydrogène,
**caractérisée en ce que**
le matériau de la première couche est un matériau à base de polyamide, dans laquelle la première couche forme une couche qui est en contact direct avec l'hydrogène s'écoulant à travers le tube de transfert d'hydrogène.

2. Utilisation du tube de transfert d'hydrogène selon la revendication 1, comprenant en outre une première couche de protection disposée afin d'entourer la première couche et la seconde couche et fournissant au tube une résistance aux chocs et une résistance à la chaleur.

3. Utilisation du tube de transfert d'hydrogène selon la revendication 2, dans laquelle la première couche de protection est formée d'un élastomère thermoplastique.

4. Utilisation du tube de transfert d'hydrogène selon la revendication 2, comprenant en outre une seconde couche de protection disposée afin d'entourer la première couche et la seconde couche et fournissant une résistance chimique au tube.

5. Utilisation du tube de transfert d'hydrogène selon la revendication 4, dans laquelle la seconde couche protection est formée d'un matériau à base de polyester.

6. Utilisation du tube de transfert d'hydrogène selon la revendication 4, dans laquelle la première couche de protection est disposée afin d'entourer une surface extérieure de la seconde couche de protection.
